# EUROPEAN PATENT APPLICATION

(11) **EP 4 478 038 A1**
(43) Date of publication of application: **18.12.2024**
(21) Application number: 23766331.5
(22) Date of filing: 20.01.2023
(51) Int. Cl.: G01N 25/18, B33Y 30/00, B33Y 50/00, B23K 9/032, B23K 9/04, B23K 31/00

(54) **LEARNING DEVICE, TEMPERATURE HISTORY PREDICTION DEVICE, WELDING SYSTEM, AND PROGRAM**

(30) Priority: 11.03.2022 JP 2022037972
(71) Applicant: KABUSHIKI KAISHA KOBE SEIKO SHO (KOBE STEEL, LTD.), Hyogo 651-8585 (JP)
(72) Inventor: HUANG Shuo, Hyogo 651-2271 (JP)
(74) Representative: Müller-Boré & Partner Patentanwälte PartG mbB
(86) International application number: PCT/JP2023/001786
(87) International publication number: WO 2023/171151

(57) **Abstract**

A learning device includes: a temperature distribution acquisition unit configured to obtain a first temperature distribution representing temperatures of a plurality of unit elements at a specific time of a deposited body and a second temperature distribution representing temperatures of the plurality of unit elements at a time when a predetermined time elapses from the specific time; and a learning unit configured to generate a prediction model by performing machine learning on a relation between the first temperature distribution and the second temperature distribution obtained by the temperature distribution acquisition unit, in association with the predetermined time.

## Description

### TECHNICAL FIELD

The present invention relates to a learning device, a temperature history prediction device, a welding system, and a program.

### BACKGROUND ART

In recent years, there has been an increasing need for manufacturing a component by additive manufacturing using a 3D printer, and research and development have been advanced toward the practical use of building using a metal material. For example, PTL 1 proposes a thermal fluid analysis method for obtaining a temperature history with high accuracy and in a short time required for analysis for a manufactured object (deposited body) obtained by moving a heat source to form beads on a substrate.

In a technique disclosed in PTL 1, a thermal fluid analysis is not performed in a coordinate system of Lagrange notation, but is performed in a coordinate system of Euler notation in which beads are formed on a substrate moving relative to a fixed heat source. Accordingly, it is possible to further reduce regions in which an element size of an element division model to be used for analysis is small, and it is possible to shorten a calculation time.

### CITATION LIST

### PATENT LITERATURE

Patent Literature 1: JP2020-44541A

### SUMMARY OF INVENTION

### TECHNICAL PROBLEM

In the temperature prediction by using an analysis method in the related art as in PTL 1, a finite element method (FEM) is usually used in many cases. In this case, a calculation according to a physical rule is performed for all meshes obtained by dividing a shape of the deposited body, and thus larger a size of the deposited body, the more extensive the calculation required, and it is difficult to speed up the prediction.

Therefore, an object of the present invention is to provide a learning device, a temperature history prediction device, a welding system, and a program capable of predicting a temperature history of a deposited body with high accuracy and at high speed.

### SOLUTION TO PROBLEM

The present invention has the following configuration.
(1) A learning device that generates, by performing machine learning, a prediction model that predicts a temperature history during the building of a deposited body when the deposited body is built using welding beads obtained by melting and solidifying a filler metal by moving a heat source along a predetermined path, for each of unit elements obtained by dividing a shape of the deposited body, the learning device including:
   a temperature distribution acquisition unit configured to obtain a first temperature distribution representing temperatures of a plurality of the unit elements at a specific time of the deposited body and a second temperature distribution representing temperatures of the plurality of unit elements at a time when a predetermined time elapses from the specific time; and
   a learning unit configured to generate the prediction model by performing machine learning on a relation between the first temperature distribution and the second temperature distribution obtained by the temperature distribution acquisition unit, in association with the predetermined time.
(2) A temperature history prediction device including:
   the prediction model generated by the learning device according to (1);
   an input data acquisition unit configured to acquire input data including information on a temperature distribution of the plurality of unit elements at an initial time when the deposited body is built;
   a prediction unit configured to obtain a predicted temperature distribution by the prediction model predicting a temperature distribution after a predetermined time elapses based on a state of the temperature distribution included in the input data; and
   a prediction control unit configured to input information on the predicted temperature distribution as the input data to the prediction unit again and further obtain a predicted temperature distribution after the predetermined time elapses.
(3) A welding system including:
   the temperature history prediction device according to (2); and
   a welding device configured to build the deposited body based on building conditions determined using the information on the temperature distribution predicted by the temperature history prediction device.
(4) A program that generates, by performing machine learning, a prediction model that predicts a temperature history during the building of a deposited body when the deposited body is built using welding beads obtained by melting and solidifying a filler metal by moving a heat source along a predetermined path, for each of unit elements obtained by dividing a shape of the deposited body, the program causing a computer to implement:
   a function of obtaining a first temperature distribution representing temperatures of a plurality of the unit elements at a specific time of the deposited body and a second temperature distribution representing temperatures of the plurality of unit elements at a time when a predetermined time elapses from the specific time; and
   a function of generating the prediction model by performing machine learning on a relation between the first temperature distribution and the second temperature distribution, and the predetermined time.

### ADVANTAGEOUS EFFECTS OF INVENTION

According to the present invention, the temperature history of the deposited body can be predicted with high accuracy and at high speed.

### BRIEF DESCRIPTION OF DRAWINGS

FIG. 1 is a diagram illustrating a state in which welding beads are formed by melting and solidifying a filler metal.
FIG. 2 is a schematic perspective view illustrating an example of a deposited body.
FIG. 3A is a diagram illustrating an example of a procedure for determining a path in which a deposited body is built.
FIG. 3B is a diagram illustrating an example of a procedure for determining a path in which a deposited body is built.
FIG. 4 is a schematic diagram illustrating an overall configuration of a welding device.
FIG. 5 is a block diagram of a learning device.
FIG. 6 is a flowchart illustrating a procedure for performing machine learning on a temperature history prediction model by the learning device.
FIG. 7 is a diagram illustrating a relation between a temperature distribution at a specific time and a temperature distribution at a time after a predetermined time elapses for a plurality of times.
FIG. 8 is a diagram illustrating a specific example of information on a temperature distribution input to a learning unit.
FIG. 9 is a block diagram of a temperature history prediction device.
FIG. 10 is a flowchart illustrating a procedure for predicting a temperature history of the deposited body when the deposited body is built.
FIG. 11 is a diagram illustrating the formation of welding beads and a state of a temperature distribution of unit elements in a stepwise manner in time series.
FIG. 12 is a diagram illustrating the formation of welding beads and a state of a temperature distribution of unit elements in a stepwise manner in time series.
FIG. 13 is a diagram illustrating a state in which an element size of the unit elements is changed.
FIG. 14A is a diagram illustrating a state of a temperature change when a predetermined time is maintained constant until a predicted temperature approaches a reference temperature.
FIG. 14B is a diagram illustrating a state of a temperature change when the predetermined time is changed until a predicted temperature approaches the reference temperature.
FIG. 15A is a diagram illustrating a first temperature distribution and a second temperature distribution used for machine learning.
FIG. 15B is a diagram illustrating each data set of the first temperature distribution and the second temperature distribution used for machine learning.
FIG. 16 is a diagram illustrating a state in which a plurality of unit elements obtained by dividing a shape of the deposited body are simulated to shapes of the welding beads.
FIG. 17 is a model diagram illustrating a shape of a deposited body used in Verification Example 1.
FIG. 18 is a graph illustrating test results showing temporal changes between predicted temperature values at positions P1, P2, P3, and P4 on a two-dimensional cross section illustrated in FIG. 17 and temperatures obtained by numerical analysis.
FIG. 19 is a model diagram illustrating a shape of a deposited body used in Verification Example 2.
FIG. 20 is a cross-sectional view illustrating predicted positions of a temperature distribution in the model illustrated in FIG. 19.
FIG. 21 is a graph illustrating test results showing temporal changes between predicted temperature values at positions P1, P2, P3, and P4 on a two-dimensional cross section illustrated in FIG. 19 and temperatures obtained by numerical analysis.

### DESCRIPTION OF EMBODIMENTS

Hereinafter, embodiments of a learning device and a temperature history prediction device according to the present invention will be described in detail with reference to the drawings. In the present embodiment, a temperature history during the building of a deposited body when welding beads are deposited to build a deposited body having a desired shape is predicted. A prediction model generated by performing machine learning is used for the prediction of the temperature history.

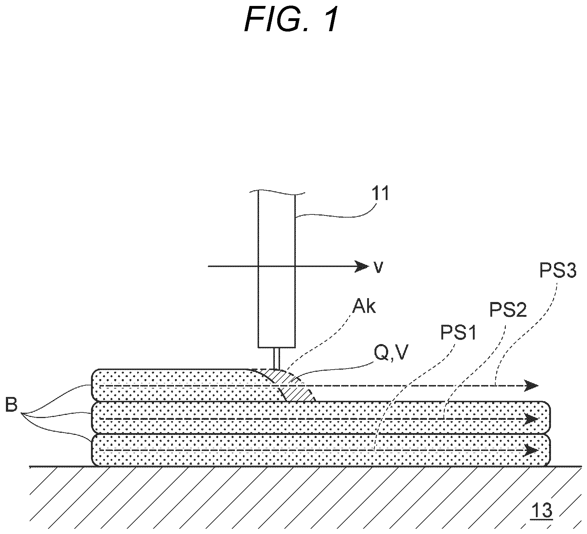

FIG. 1 is a diagram illustrating a state in which welding beads B are formed by melting and solidifying a filler metal. In order to build the deposited body, while a torch 11 that generates an arc Ak serving as a heat source at a tip end portion is moved along predetermined paths PS1, PS2, PS3, ..., a filler metal (not illustrated) that is continuously supplied is melted and solidified by the arc Ak. Accordingly, the welding beads B, which are molten and solidified bodies of the filler metal, are formed on a base 13, and the welding beads B are sequentially deposited, whereby the deposited body is obtained.

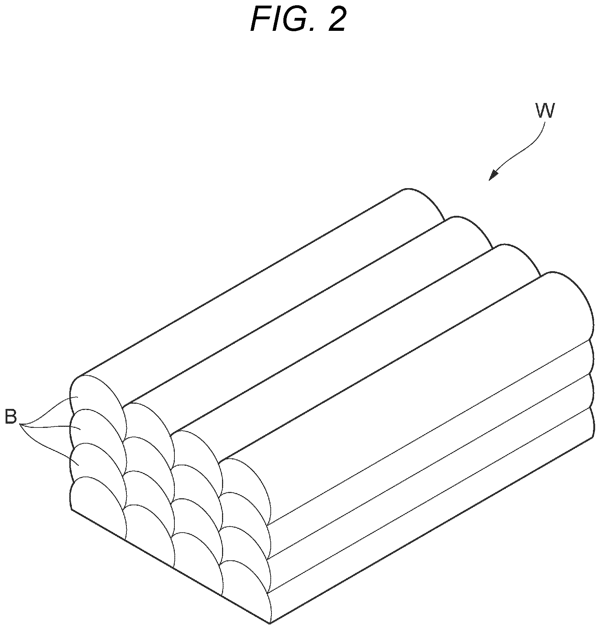

FIG. 2 is a schematic perspective view illustrating an example of a deposited body W. For example, in order to build a structure having a rectangular parallelepiped shape, a plurality of welding beads B as illustrated in FIG. 2 are deposited, and the deposited body W is machined as necessary to be finished into a structure having a desired shape. A path (movement trajectory of the torch 11) along which the welding beads B are formed in this case is determined by creating a manufacturing plan according to shape data (CAD data or the like) representing a shape of a desired structure and a type and specification of a welding device to be used.

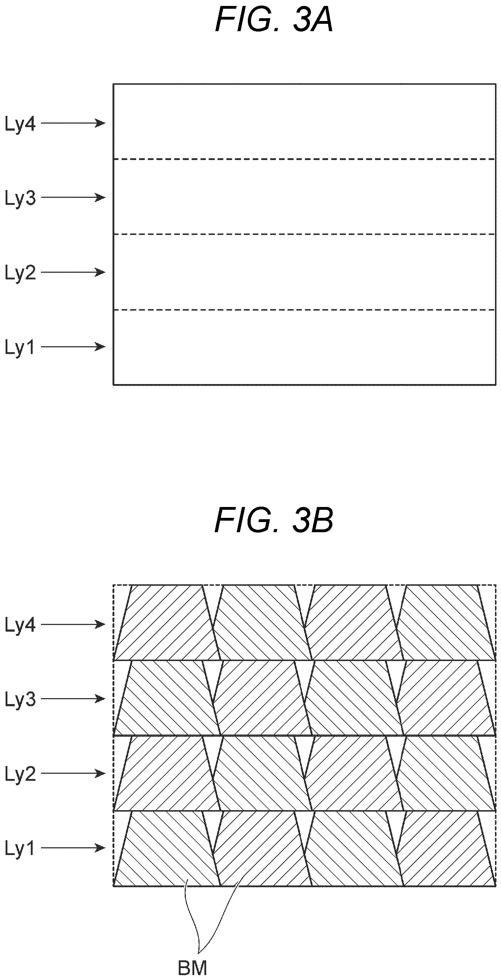

FIGS. 3A and 3B are diagrams illustrating an example of a procedure for determining a path in which the deposited body is built. Specifically, as illustrated in FIG. 3A, the path is determined by slicing a shape of the deposited body W given by the shape data to a predetermined thickness. Then, as illustrated in FIG. 3B, a path in which welding beads are formed and welding conditions are determined so as to fill shapes of the sliced layers Ly 1, Ly2, Ly3, and Ly4 with bead shape models BM having a predetermined width. Such an algorithm for creating a manufacturing plan is not particularly limited, and may be a well-known algorithm in the related art.

The temperature history during the building of a deposited body is used to improve a manufacturing quality of the deposited body W, such as evaluation of thermal strain generated in the deposited body and creation of welding conditions for reducing the thermal strain when a high-temperature portion is cooled at the time of forming the welding beads B.

### <Configuration of Welding Device>

Here, a welding device to be used for building the deposited body W will be described.

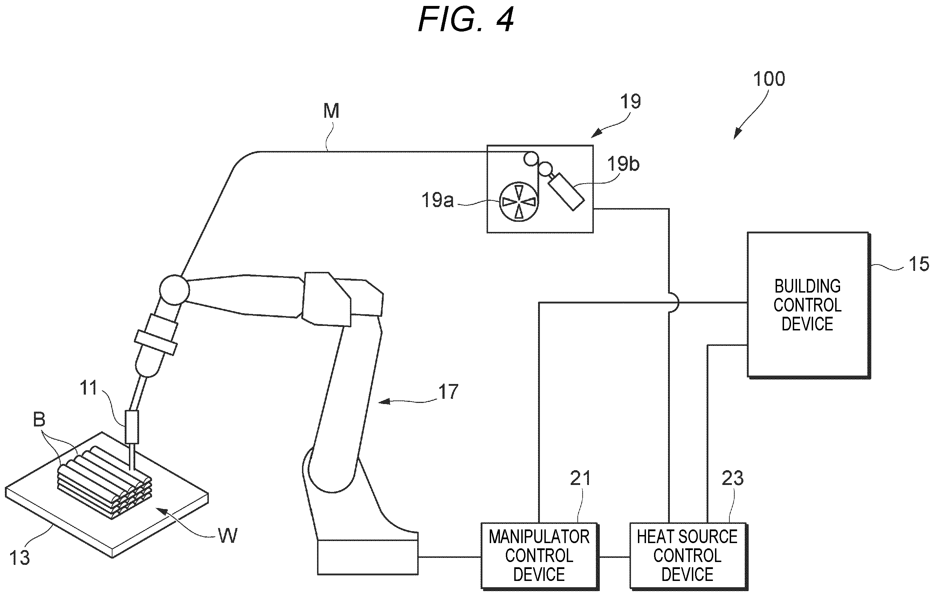

FIG. 4 is a schematic diagram illustrating an overall configuration of the welding device.

A welding device 100 includes a building control device 15, a manipulator 17, a filler metal supply device 19, a manipulator control device 21, and a heat source control device 23.

The manipulator control device 21 controls the manipulator 17 and the heat source control device 23. A controller (not illustrated) is connected to the manipulator control device 21, and an operator can instruct any operation of the manipulator control device 21 via the controller.

The manipulator 17 is, for example, an articulated robot, and a filler metal (welding wire) M is supported by the torch 11 provided on a tip end shaft of the manipulator 17 so as to be continuously supplied. The torch 11 holds the filler metal M in a state of protruding from a tip end thereof. A position and posture of the torch 11 can be freely set three-dimensionally within a range of degrees of freedom of a robot arm constituting the manipulator 17. The manipulator 17 preferably has six or more degrees of freedom, and is preferably capable of freely changing an axial direction of the heat source at a tip end thereof. The manipulator 17 may be in various forms, such as an articulated robot having four or more axes illustrated in FIG. 4 or a robot having angle adjustment mechanisms on two or more orthogonal axes.

The torch 11 includes a shield nozzle (not illustrated), and is supplied with shield gas from the shield nozzle. The shield gas blocks the atmosphere, prevents oxidation, nitridation, and the like of molten metal during welding, and reduces welding failures. An arc welding method used in this configuration may be any one of a consumable electrode type such as coated arc welding or carbon dioxide gas arc welding, and a non-consumable electrode type such as the Tungsten Inert Gas (TIG) welding or plasma arc welding, and is appropriately selected depending on the deposited body W to be built. Here, gas metal arc welding will be described as an example. In the case of the consumable electrode type, a contact tip is disposed inside the shield nozzle, and the filler metal M to which a current is supplied is held by the contact tip. The torch 11 generates an arc from a tip end of the filler metal M in a shield gas atmosphere while holding the filler metal M.

The filler metal supply device 19 supplies the filler metal M toward the torch 11. The filler metal supply device 19 includes a reel 19a around which the filler metal M is wound, and a feeding mechanism 19b that feeds the filler metal M from the reel 19a. The filler metal M is fed to the torch 11 while being fed forward or backward by the feeding mechanism 19b as necessary. The feeding mechanism 19b is not limited to a push type disposed on a filler metal supply device 19 side to push out the filler metal M, and may be a pull type or a push-pull type disposed on the robot arm or the like.

The heat source control device 23 is a welding power source that supplies electric power required for welding by the manipulator 17. The heat source control device 23 adjusts a welding current and a welding voltage to be supplied at the time of forming beads by melting and solidifying the filler metal M. In addition, a filler metal feeding speed of the filler metal supply device 19 is adjusted in conjunction with welding conditions such as the welding current and the welding voltage set by the heat source control device 23.

A heat source for melting the filler metal M is not limited to the above-described arc. For example, a heat source using another method such as a heating method using both an arc and a laser, a heating method using plasma, or a heating method using an electron beam or a laser may be used. In the case of heating by an electron beam or a laser, a heating amount can be more finely controlled, and a state of a bead to be formed can be more appropriately maintained, thereby contributing to further improvement in quality of an additive structure. In addition, a material of the filler metal M is not particularly limited, and for example, types of the filler metal M to be used may be different according to properties of the deposited body W such as mild steel, high-tensile steel, aluminum, aluminum alloy, nickel, and nickel-base alloy.

The welding device 100 having the above-described configuration operates according to a manufacturing program created based on a manufacturing plan of the deposited body W. The manufacturing program includes a large number of command codes, and is created based on an appropriate algorithm according to various conditions such as a shape, a material, and a heat input amount of a manufactured object. When the filler metal M to be fed is melted and solidified while moving the torch 11 according to the manufacturing program, linear welding beads B which are molten and solidified bodies of the filler metal M are formed on the base 13. That is, the manipulator control device 21 drives the manipulator 17 and the heat source control device 23 based on a predetermined program provided from the building control device 15. The manipulator 17 forms the welding beads B by moving the torch 11 while melting the filler metal M with an arc, according to a command from the manipulator control device 21. By sequentially forming and depositing the welding beads B in this manner, the deposited body W having a desired shape can be obtained.

The welding device 100 may be implemented as a welding system including the learning device and the temperature history prediction device to be described later. In this case, a manufacturing plan of the deposited body can be created based on accurately predicted temperature distribution, whereby a high-quality deposited body can be built.

### <Learning Device>

Next, the learning device that generates, by machine learning, a prediction model for predicting a temperature history during the building of the deposited body W to be built by the welding device 100 will be described.

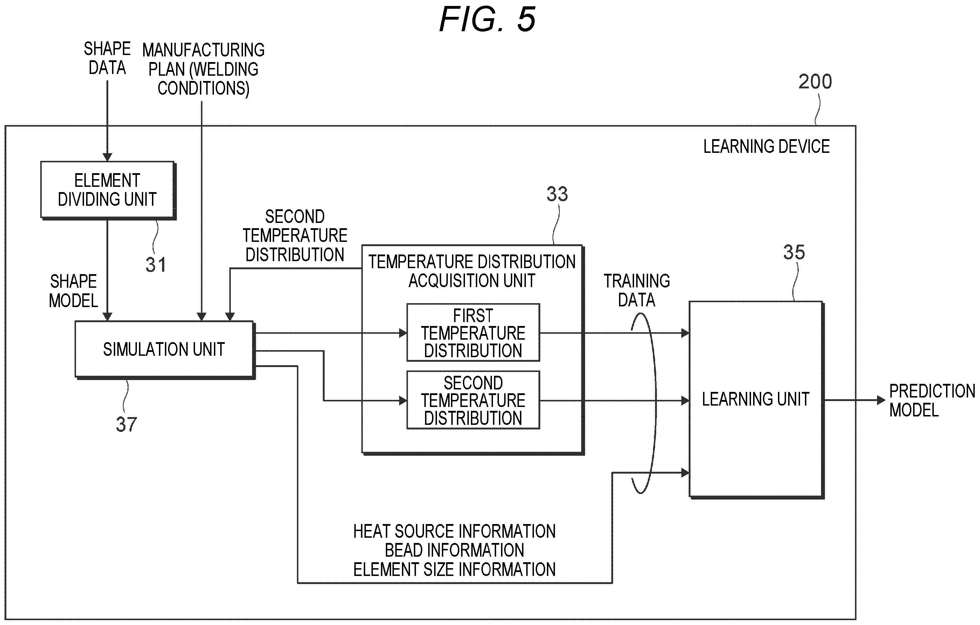

FIG. 5 is a block diagram of a learning device 200. The learning device 200 includes an element dividing unit 31, a temperature distribution acquisition unit 33, a learning unit 35, and a simulation unit 37. The simulation unit 37 is used when training data is obtained by numerical analysis.

Although details of the above-described units will be described later, the respective units generally function as follows. The learning device 200 receives information such as shape data representing a shape of a deposited body to be built, and welding conditions based on a predetermined manufacturing plan for the deposited body. The element dividing unit 31 divides the shape of the deposited body W of the shape data into a plurality of unit elements to generate a shape model. The division into the unit elements corresponds to, for example, dividing the shape of the deposited body illustrated in FIG. 3B into a plurality of bead shape models BM, and may also be divided into meshes of finer size. When a shape model divided into a plurality of unit elements is input to the learning device 200, the element dividing unit 31 becomes unnecessary.

The temperature distribution acquisition unit 33 acquires a temperature distribution (first temperature distribution) representing temperatures of a plurality of unit elements at a specific time of the deposited body and a temperature distribution (second temperature distribution) representing temperatures of the plurality of unit elements at a time when a predetermined time Δt elapses from the specific time. The predetermined time Δt may be set to any time such as 10 seconds. Each temperature distribution may be obtained by calculation using the simulation unit 37, or may be obtained by preparing and measuring a test sample. The simulation unit 37 calculates the second temperature distribution based on information on the temperature distribution (first temperature distribution) in an initial state by numerical analysis such as thermal fluid analysis according to the finite element method using the plurality of divided unit elements. The procedure for obtaining each temperature distribution through numerical analysis by the simulation unit 37 will be described later. The simulation unit 37 may be implemented by specially designed software or circuit, or may perform simulation by setting various conditions of additive manufacturing on general-purpose thermal fluid analysis software (for example, FLOW-3D (registered trademark) manufactured by Flow Science Corporation).

The learning unit 35 generates a prediction model by performing machine learning on a relation between the first temperature distribution and the second temperature distribution obtained by the temperature distribution acquisition unit 33, in association with the predetermined time Δt. In addition to the first temperature distribution and the second temperature distribution, information on the movement of the heat source and the generation of the welding beads may be included in the training data. As illustrated in FIG. 1, examples of the information on the heat source include a heat input amount Q supplied per unit time, and a movement direction and a movement speed v of the heat source, and examples of the information on the generation of the welding beads include a bead generation volume V and a bead cross-sectional area S.

The learning device 200 is implemented by, for example, hardware using an information processing device such as a personal computer (PC). Each function of the learning device 200 is implemented by a control unit (not illustrated) reading and executing a program having a specific function stored in a storage device (not illustrated). Examples of the storage device include a memory such as random access memory (RAM) which is a volatile storage area and read only memory (ROM) which is a non-volatile storage area, and a storage such as hard disk drive (HDD) and solid state drive (SSD). Examples of the control unit include a processor such as a central processing unit (CPU) and a micro processor unit (MPU), or a dedicated circuit.

### <Learning Procedure>

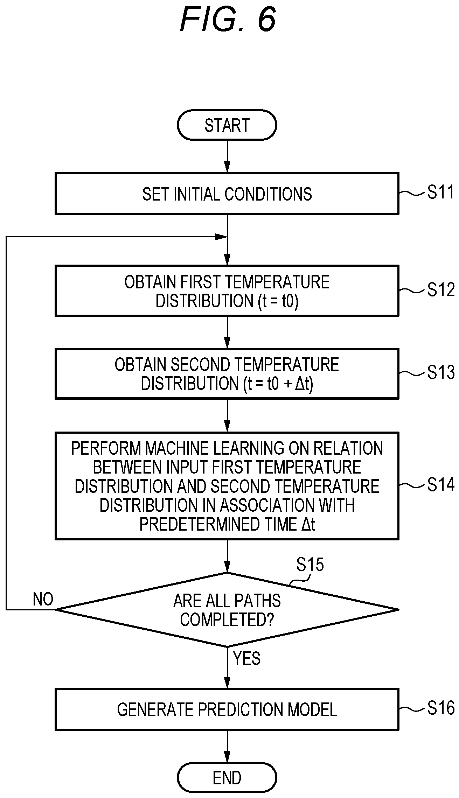

FIG. 6 is a flowchart illustrating a procedure for machine learning a temperature history prediction model by the learning device 200. The learning device 200 sets initial conditions such as a shape model implemented by a plurality of unit elements and welding conditions by inputting the initial conditions to the simulation unit 37 (Step 1: S11). The simulation unit 37 determines temperatures of the plurality of unit elements at a specific time t₀ when a deposited body is built by forming welding beads. The temperature distribution acquisition unit 33 acquires the obtained temperature distribution of the unit elements as the first temperature distribution at the specific time t₀ (S12). Here, the specific time t₀ may be a time when the formation of the welding beads is started or may be a time during the bead formation. In any case, the temperature distribution at the specific time t₀ is known.

Next, the second temperature distribution representing the temperatures of the plurality of unit elements at a time (t₀ + Δt) when the predetermined time Δt elapses from the specific time t₀ is obtained (S13). The second temperature distribution is a temperature distribution in a state in which heat input from the heat source (arc) for bead formation propagates to surrounding unit elements and is cooled after the predetermined time Δt elapses from the state of the first temperature distribution. The simulation unit 37 analytically obtains the second temperature distribution based on temperature information of the first temperature distribution and information such as physical property values of the shape model. The temperature distribution acquisition unit 33 acquires the second temperature distribution obtained by the simulation unit 37.

The temperature distribution acquisition unit 33 outputs the information on the acquired first temperature distribution and second temperature distribution to the learning unit 35 as the training data. In addition, the learning unit 35 receives various kinds of information based on the information on the shape data and the manufacturing plan input to the simulation unit 37, such as the heat input amount supplied from the heat source at the time of forming the welding beads, the movement direction and the movement speed of the heat source, a formation volume of the welding bead per unit time, state information indicating the presence or absence of the welding bead for each unit element, and size information of the unit elements. Further, the addition of the welding bead and heat input amount associated with the addition of the welding bead may also be learned together. The learning unit 35 performs machine learning on the relation between the input first temperature distribution and the second temperature distribution in association with the predetermined time Δt (S14). In addition, the learning unit 35 may perform machine learning in combination with the above-described heat source information, bead information, and element size information.

The information related to the heat source is included in the training data for the learning unit 35, and thus it is possible to more accurately predict the temperature distribution when the welding beads are formed while the heat source moves. In addition, by learning the state information indicating the presence or absence of the welding bead, it is possible to predict the presence or absence of the generation of the welding bead along with the movement of the heat source together with the temperature distribution. Furthermore, the size information of the unit elements is included in the training data, and thus it is possible to perform prediction at a size (mesh size) of any unit element.

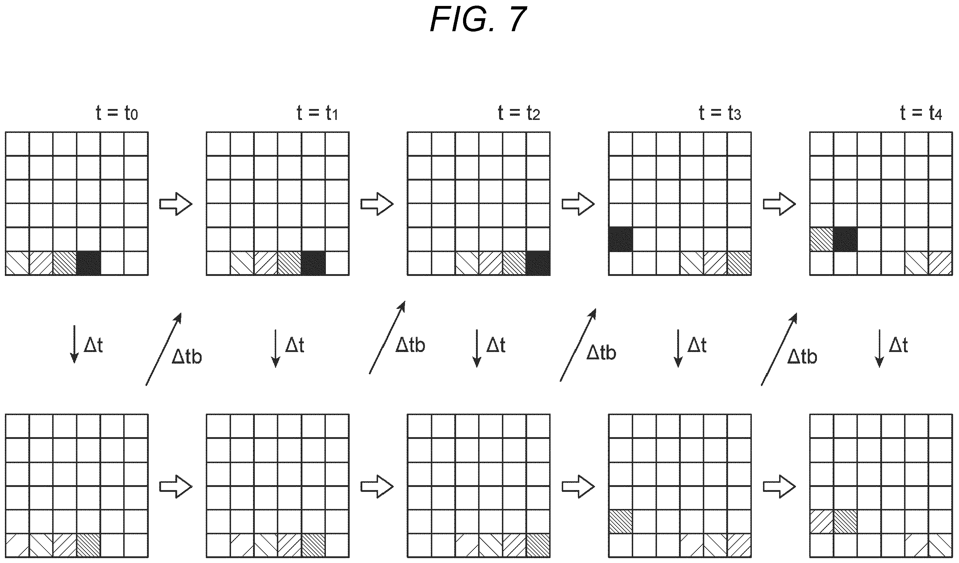

FIG. 7 is a diagram illustrating a relation between the temperature distribution at the specific time (t = to) and the temperature distribution at the time (t = to + Δt) after the predetermined time Δt elapses for a plurality of times. The learning device 200 sequentially obtains a set of the first temperature distribution at the specific time (t = to) illustrated in FIG. 7 and the second temperature distribution at the time (t = to + Δt) after the predetermined time Δt elapses from the specific time along the path in which the welding beads are formed. That is, the temperature distribution acquisition unit 33 acquires information on the set of the first temperature distribution and the second temperature distribution in the order of t₁, t₂, t₃, ..., until the building of the deposited body is completed along the predetermined path, and outputs the information to the learning unit 35 (S15).

The temperature distribution acquisition unit 33 may further acquire information on a temperature distribution between different times and provide the information to the learning unit 35 as training data. A time from a specific time tᵢ to a next specific time tᵢ₊₁ is set to be longer than the above-described predetermined time Δt. For example, the predetermined time Δt may be set to 1 second, the time from the specific time tᵢ to the specific time tᵢ₊₁ may be set to 10 seconds or the like, and each time can be set to any time according to the purpose.

Here, the time when the predetermined time Δt elapses from the specific time t₀ is set to ta, and a time from the time ta to the next specific time t₁ is set to Δtb. In this case, the relation between the second temperature distribution at the time ta when the predetermined time Δt elapses from the specific time t₀ and the first temperature distribution after the time Δtb elapses from the time ta, that is, at the next specific time t₁, can also set as a learning target. Specifically, the second temperature distribution at the time ta is output to the learning unit 35 as the "first temperature distribution", and the first temperature distribution at the time when the time Δtb elapses from the time ta, that is, the next specific time (to + Δt + Δtb = t₁) is output to the learning unit 35 as the "second temperature distribution". Similarly, information on each of the second temperature distributions (treated as the "first temperature distributions") after the predetermined time Δt elapses from the subsequent specific times t₂, t₃, ..., and each of the first temperature distributions (treated as the "second temperature distributions") at the specific times after the specific time t₂ are output to the learning unit 35. A change in the temperature distribution in this case is a temperature change accompanied by heat input, and thus a cycle of cooling and heat input can be easily learned.

That is, the temperature distribution acquisition unit 33 acquires a first data set of a plurality of first temperature distributions in a time range including a plurality of different specific times and a second data set of a plurality of second temperature distributions in a time range including specific times when the predetermined time Δt elapses from the respective plurality of specific times. At the same time, a third data set of the second temperature distributions at the specific time ta of the second data set and a fourth data set of the first temperature distributions at the specific time (ta + Δtb) of the first data set corresponding to when there is heat input to the deposited body from the specific time ta are acquired.

The learning unit 35 performs machine learning on the input information to generate a prediction model (S16). For example, in the above case, the learning unit performs machine learning on a relation between the first data set and the second data set in association with the respective predetermined times Δt. In addition, the relation between the third data set and the fourth data set is machine-learned in association with a time difference (Δtb) between the second temperature distribution and the first temperature distribution. Accordingly, the learning unit 35 generates the prediction model.

The prediction model exhibits a function of predicting the second temperature distribution after the predetermined time Δt elapses when the information on the first temperature distribution is input from the outside and outputting the prediction result.

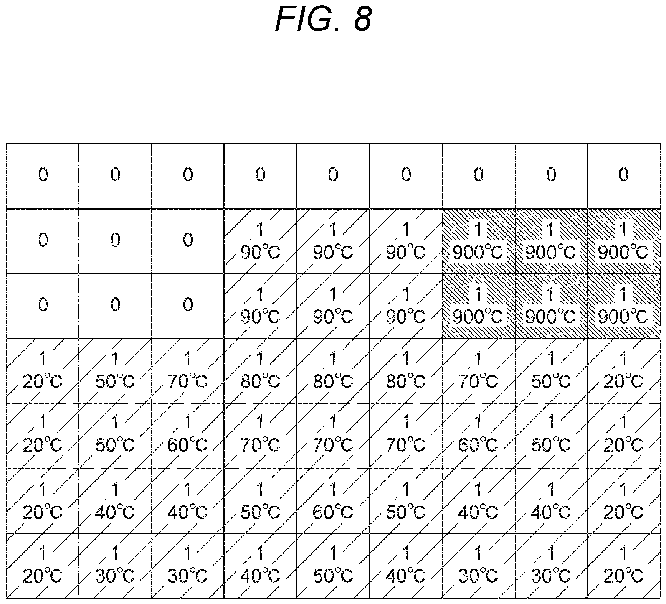

FIG. 8 is a diagram illustrating a specific example of the information on the temperature distribution input to the learning unit 35. The information on the temperature distribution input to the learning unit 35 is set for each unit element. In one unit element, " 1" is set as a flag when a welding bead is present, and "0" is set as a flag when no welding bead is present. In the unit elements illustrated in FIG. 8, the flag "0" is indicated for the unit element in which no welding bead is present, and the flag " 1" and a temperature of the unit element are indicated for the unit element in which a welding bead is present. As specific examples, temperatures of the unit elements (six unit elements) at positions at which welding beads are newly formed are 900°C, and temperatures of the unit elements (six unit elements) at positions at which welding beads are previously formed adjacent thereto are 90°C. Temperatures of the unit elements in layers lower than the unit elements are decreased from 70°C to 20°C due to the cooling with time. Such information on the temperature distribution is supplied to the learning unit 35 as the training data for machine learning.

Examples of a machine learning method for generating a prediction model include methods such as a decision tree, linear regression, random forest, support vector machine, Gaussian process regression, and convolutional neural network. A plurality of prediction models may be generated for each type of filler metal. When gathering into one prediction model, the prediction model may be trained by adding some or all pieces of information on components of the filler metal to training data.

When the temperature distribution acquisition unit 33 acquires the second temperature distribution at the time (t = to + Δt) after the predetermined time Δt elapses, the temperature distribution acquisition unit 33 may repeatedly obtain the second temperature distribution by further passing the time after the predetermined time Δt elapses until the temperatures of the unit elements corresponding to the welding beads after formation become equal to or lower than a predetermined reference temperature. When the welding beads are formed, in a case in which a welding bead serving as a base has a high viscosity (fluidity) at a high temperature, a desired bead height may not be obtained due to dripping of the molten metal of welding beads newly formed on the base, collapse of the welding bead serving as the base, and the like. Therefore, by waiting until a temperature of the welding bead serving as the base becomes equal to or lower than a predetermined reference temperature Tp and forming a new welding bead when the temperature becomes equal to or lower than the reference temperature Tp, a bead height is easily formed to a designed height. Such a reference temperature Tp can derive an "inter-pass time" required for cooling the deposited welding beads. When the simulation unit 37 analytically obtains a time when the temperature becomes equal to or lower than the reference temperature Tp, the learning unit 35 learns the inter-pass time, and it is possible to predict an accurate inter-pass time together with the temperature distribution. Accordingly, in a prediction stage of the temperature distribution using the prediction model before a bead is actually formed, an inter-pass time can also be set, and the manufacturing plan of the deposited body can be easily adjusted such that a welding bead on an upper layer is formed after the temperature (temperature or maximum temperature of a specific portion of the second temperature distribution) of the welding bead serving as the base reaches the reference temperature Tp.

The prediction model is generated by performing machine learning on a relation between the first temperature distribution representing the temperatures of the plurality of unit elements at the specific time of the deposited body and the second temperature distribution representing the temperatures of the plurality of unit elements at the time when the predetermined time elapses from the specific time, in association with the predetermined time. Therefore, a large amount of data at different times can be acquired from a calculation result by the numerical analysis, and the large amount of data can be used as training data. In addition, if a prediction model obtained by performing machine learning on the large amount of training data is used, the temperature distribution of the deposited body during the building can be predicted with high accuracy and at high speed. Furthermore, a temperature is obtained for each unit element, and thus a temperature at any position of the deposited body can be predicted.

### <Prediction of Temperature History>

Next, the temperature history prediction device that predicts the temperature distribution of the deposited body using the prediction model generated by the machine learning performed by the learning device 200 will be described.

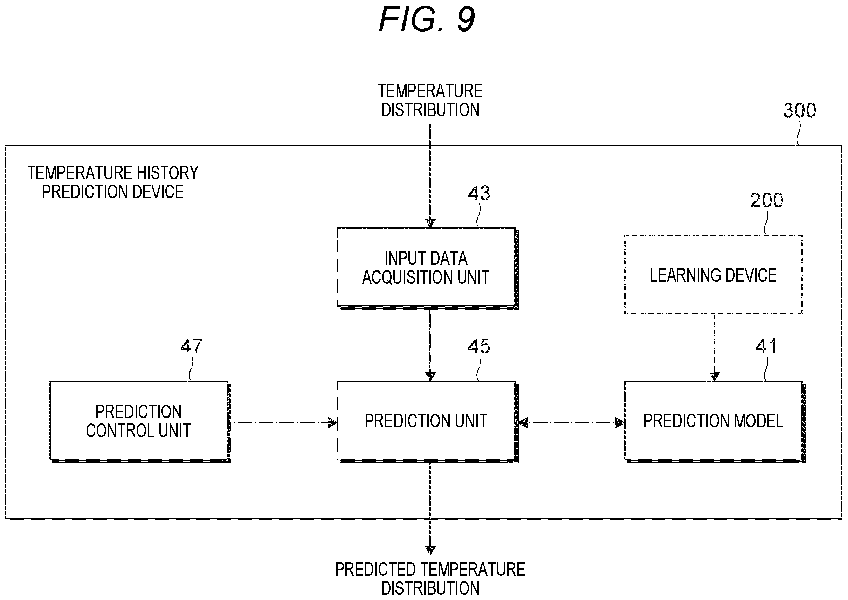

FIG. 9 is a block diagram of a temperature history prediction device 300. The temperature history prediction device 300 includes a prediction model 41 generated by the learning device 200, an input data acquisition unit 43, a prediction unit 45, and a prediction control unit 47. The temperature history prediction device 300 has the same hardware configuration as the learning device 200. In addition, the temperature history prediction device 300 may be integrated with the learning device 200.

Although the details of the above-described units will be described later, the respective units generally function as follows. The input data acquisition unit 43 acquires input data including the information on the temperature distribution (first temperature distribution) of the plurality of unit elements at the initial time when the deposited body is built. The prediction unit 45 obtains a predicted temperature distribution obtained by predicting a temperature distribution after the predetermined time Δt elapses based on a state of a temperature distribution included in the input data using the prediction model 41. The prediction control unit 47 inputs the information on the predicted temperature distribution to the prediction unit 45 again as the input data, and further obtains a predicted temperature distribution after the predetermined time elapses. In this way, the temperature distribution after predetermined times such as 2Δt, 3Δt, 4Δt, ..., elapse can be continuously obtained as a temperature history.

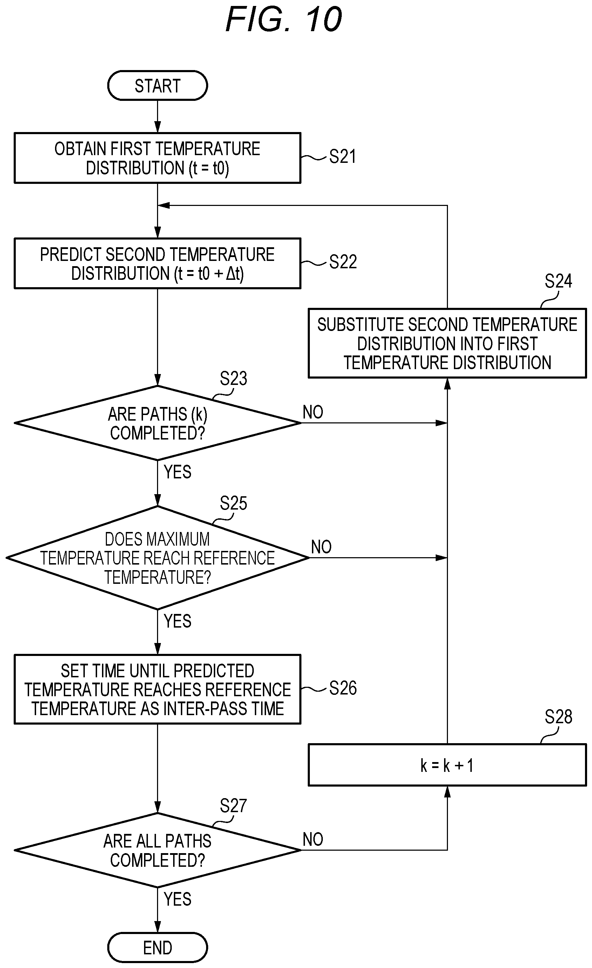

FIG. 10 is a flowchart illustrating a procedure for predicting a temperature history of the deposited body when the deposited body is built. First, the input data acquisition unit 43 obtains the first temperature distribution at the initial time (t = t₀) when the deposited body is built from the input data, and inputs the information on the first temperature distribution to the prediction unit 45 (S21). Next, the prediction unit 45 predicts the second temperature distribution after the predetermined time Δt elapses based on the input information on the first temperature distribution using the prediction model 41 (S22). Then, the prediction of the temperature distribution is repeated until the bead formation along one path is completed (S23). When the prediction is repeated, the predicted second temperature distribution is input again to the prediction model 41 as the first temperature distribution (S24). Accordingly, the prediction model 41 predicts the temperature distribution again after the predetermined time elapses based on the input temperature distribution (second temperature distribution).

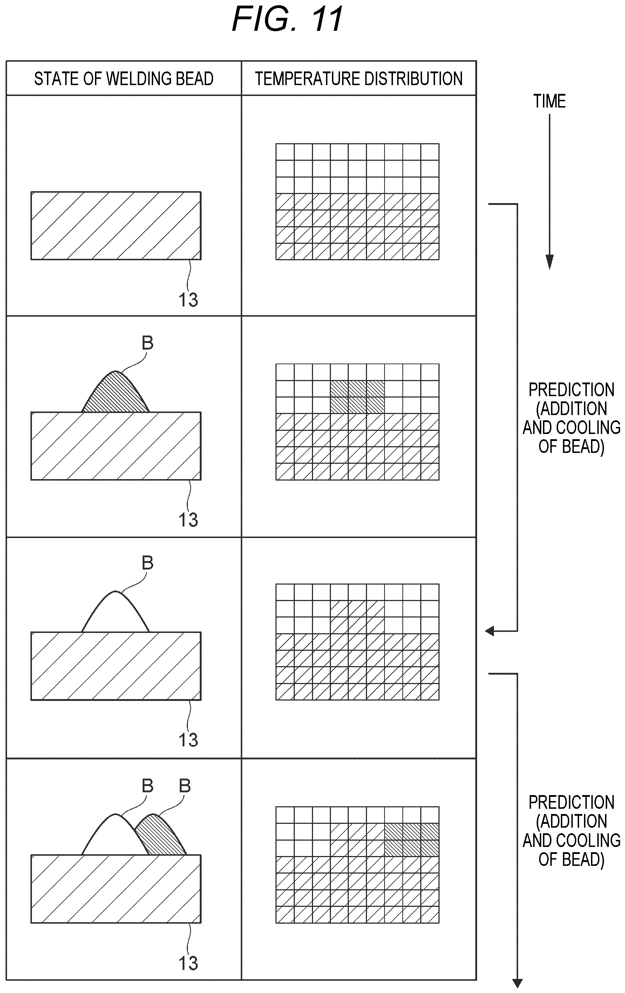

FIG. 11 is a diagram illustrating the formation of welding beads and a state of a temperature distribution of unit elements in a stepwise manner in time series. A left column in FIG. 11 shows a state of a welding bead on the base 13, and a right column shows a temperature distribution in each state. At the specific time (initial time) tₒ, a unit element (shown in light hatching) corresponding to the base 13 is at a constant temperature. Unit elements on the base 13 are unit elements (shown in white frames) in which no welding bead B is present, and flags are set to "0".

Next, when a welding bead B is formed on the base 13, flags of unit elements (shown in dark hatching) at positions corresponding to the welding bead B are set to " 1", and a temperature distribution is predicted using the prediction model 41. When a time elapses from this state, the temperature of the welding bead B gradually decreases and becomes substantially the same temperature as that of other existing welding beads B. After the existing welding beads reach a certain temperature (for example, the above-described reference temperature Tp), a next welding bead B is formed adjacent to the existing welding beads B. Flags of unit elements (shown in dark hatching) at positions corresponding to the newly provided welding bead B are set to "1", and a temperature distribution is predicted using the prediction model 41.

As described above, a temperature change in the addition of the welding bead and the subsequent cooling is predicted using the prediction model 41. The prediction model 41 is trained for a relation between a temperature at the time of forming the welding beads and the temperature distribution after the predetermined time elapses, and thus can perform an accurate temperature prediction.

When the formation of the welding beads along one path is completed, it is determined whether temperatures of unit elements at positions corresponding to the welding beads formed along the current path reach the reference temperature Tp in the second temperature distribution predicted last by the prediction model 41 (S25). When the temperatures do not reach the reference temperature Tp, a temperature distribution after the predetermined time elapses is further predicted. As a result, when the predicted temperature reaches the reference temperature Tp, a time until the predicted temperature reaches the reference temperature Tp is set as the above-described inter-pass time. Here, the prediction is repeated until the temperature reaches the reference temperature Tp, and the prediction may be repeated for a predetermined period of time. When the predicted temperature reaches the reference temperature Tp, the prediction control unit 47 sets the time until the predicted temperature reaches the reference temperature Tp as the inter-pass time and outputs the inter-pass time to the prediction unit 45. The prediction unit 45 outputs the inter-pass time together with the information on the predicted temperature distribution as output information (S26).

The above process is repeated until all the paths (paths (k): k = 1 to N, N is the number of paths) on which the deposited body is built are completed (S27 and S28).

Accordingly, by predicting the temperature history at the time of building the deposited body using the prediction model 41, it is possible to greatly reduce a calculation processing and to accurately obtain a temperature distribution in a short time as compared with a case of obtaining a temperature distribution by repeating numerical analysis.

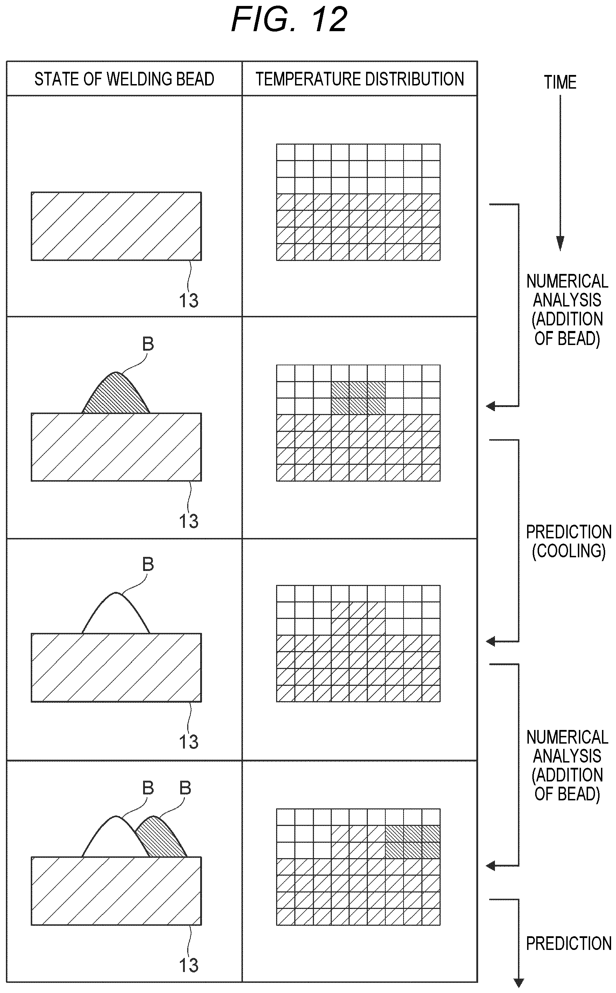

FIG. 12 is a diagram illustrating the formation of welding beads and a state of a temperature distribution of unit elements in a stepwise manner in time series. The prediction of the temperature distribution using the prediction model 41 illustrated in FIG. 12 is performed only in a process of cooling a welding bead B after the welding bead B is added. When a temperature of the added welding bead B rises, a temperature distribution is predicted by numerical analysis. In this way, a calculation amount increases as compared with a case in which all of a heating process and a cooling process are predicted by the prediction model 41, but by predicting a heat dissipation phenomenon, which is a relatively simple phenomenon, using the prediction model 41 and calculating a complex process involving the melting and solidification of metal by numerical analysis, it is possible to improve an overall prediction accuracy and shorten a calculation time in a balanced manner.

In general, instead of performing numerical analysis such as the FEM or the like, a prediction technique using a neural network or the like as in the present prediction method is known as surrogate modeling. It is possible to perform prediction by using the surrogate modeling at a higher speed than performing the numerical analysis. By performing the prediction using the prediction model instead of the numerical analysis for the temperature distribution, an accurate temperature prediction can be easily performed at a higher speed.

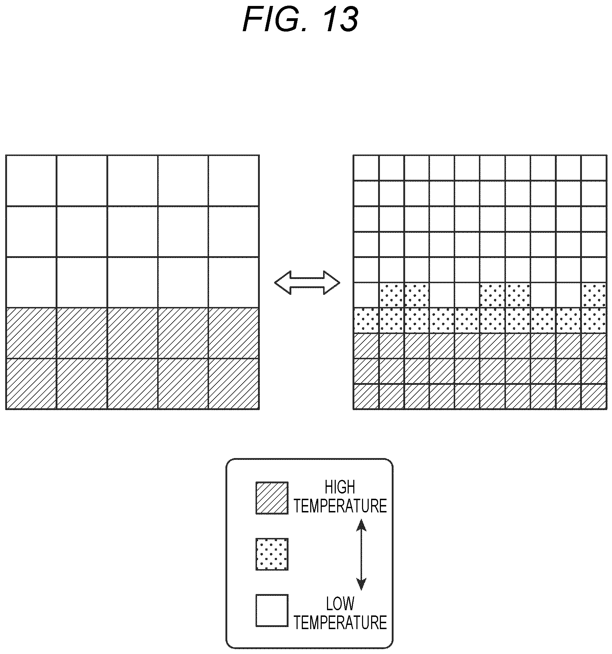

FIG. 13 is a diagram illustrating a state in which an element size of the unit elements is changed. When the learning unit 35 illustrated in FIG. 5 performs machine learning including information on the element size together with the information on the temperature distribution, a relation between the temperature distributions when element sizes of the unit elements are different may be learned. For example, when a temporal change in temperature in a specific temperature range is more intense than in other ranges, the element size of the unit elements included in the temperature range is slightly changed. Accordingly, the temperature change can be grasped more accurately, and more accurate temperature prediction can be performed when learning is performed with the unit elements having a small element size. In particular, in a region in which a temporal change is small, the element size of the unit elements provided in the region is greatly changed. Accordingly, it is possible to combine regions in which an influence on a temperature is particularly small, and it is possible to reduce the calculation amount without reducing accuracy. That is, the prediction unit 45 outputs the second temperature distribution having a different element size from the first temperature distribution by making the element size of the unit elements finer or coarser depending on the temperature or other factors. Accordingly, it is possible to improve the prediction accuracy and shorten the calculation time in a balanced manner.

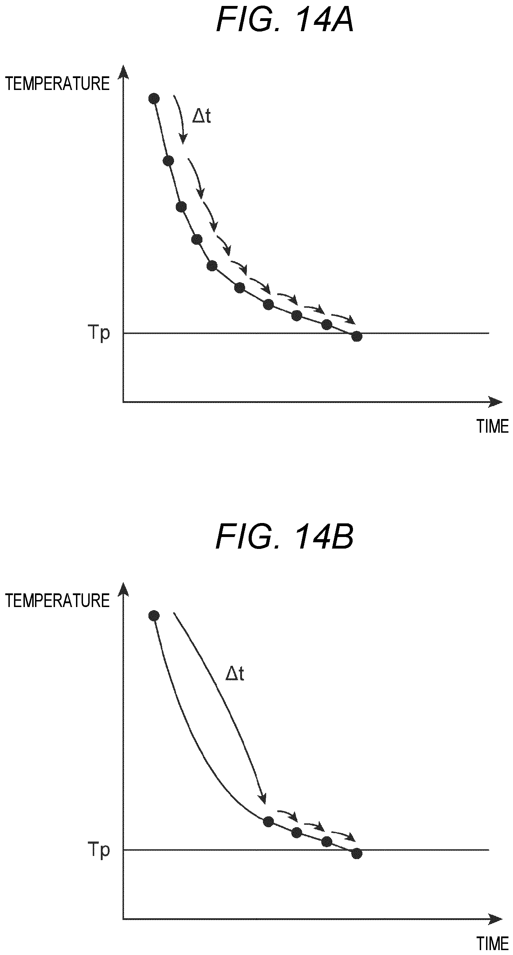

FIG. 14A is a diagram illustrating a state of a temperature change when the predetermined time Δt is maintained constant until a predicted temperature approaches the reference temperature Tp. FIG. 14B is a diagram illustrating a state of a temperature change when the predetermined time Δt is changed until a predicted temperature approaches the reference temperature Tp. When the temperature distribution is repeatedly predicted over time, the predetermined time Δt is set to a constant time in the prediction procedure described above as illustrated in FIG. 14A, and the predetermined time Δt is not limited to thereto. As illustrated in FIG. 14B, the time interval Δt during which the prediction control unit 47 repeatedly obtains the predicted temperature distribution may be set to be longer as it goes back to a time before a time when the temperatures of the welding beads in the predicted temperature distribution reach the predetermined reference temperature Tp. In this case, the calculation at a stage during which the predicted temperature reaches a temperature close to the reference temperature Tp can be omitted. Further, the time interval Δt during which the prediction control unit 47 repeatedly obtains the predicted temperature distribution may be set to be shorter as the temperature of the welding bead in the predicted temperature distribution approaches the predetermined reference temperature Tp. In this case, a time at which the predicted temperature reaches the reference temperature Tp can be predicted more accurately. In the learning of the temperature distribution, it is preferable to learn a temperature distribution in a temperature range that is sufficiently higher than the reference temperature (inter-pass temperature) Tp from the viewpoint of accurately obtaining a timing that falls below the inter-pass time.

In the machine learning of the learning device 200, the first temperature distribution at the specific time tᵢ and the second temperature distribution at the time tᵢ₊₁ after the predetermined time Δt elapses from the specific time tᵢ are obtained, and the first temperature distribution and the second temperature distribution are machine-learned.

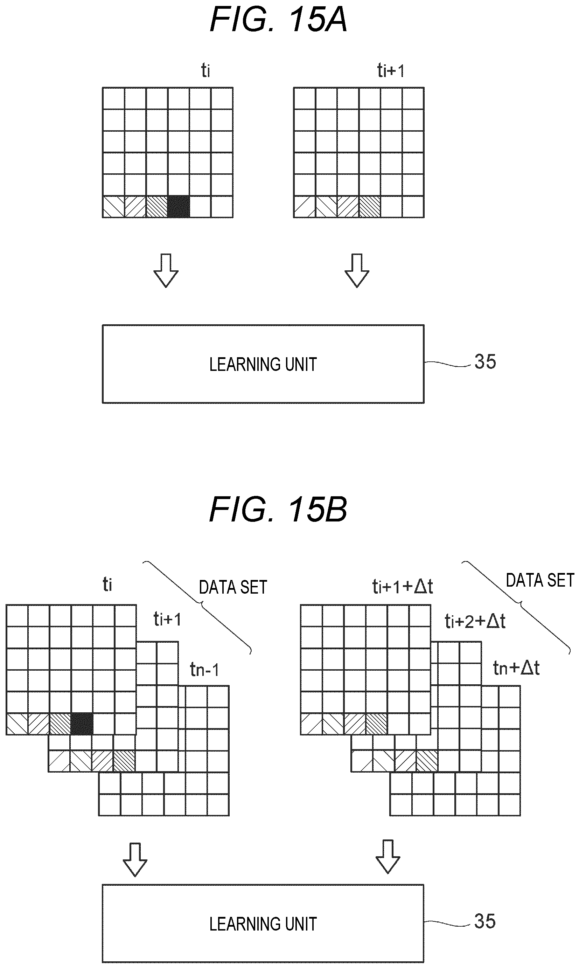

FIG. 15A is a diagram illustrating the first temperature distribution and the second temperature distribution used for machine learning. FIG. 15B is a diagram illustrating each data set of the first temperature distribution and the second temperature distribution used for machine learning. As illustrated in FIG. 15A, when machine learning is performed on a set of information on the temperature distribution at the specific time tᵢ and the temperature distribution at the time tᵢ₊₁, the temperature distribution at the time tᵢ₊₁ after a lapse of time can be predicted based on the temperature distribution at the specific time tᵢ, and it may be difficult to predict a temperature distribution at times other than the time tᵢ₊₁. Therefore, as illustrated in FIG. 15B, a relation between a data set of temperature distributions at specific times tᵢ, tᵢ₊₁, ..., tₙ₋₁ and a data set of temperature distributions at times tᵢ+Δt, tᵢ₊₁+Δt, ..., tₙ+Δt is machine-learned in association with the respective predetermined times Δt. In this case, the generated prediction model is also trained at the times other than the specific time tᵢ₊₁, and thus more accurate prediction can be expected.

When the prediction model is also trained for the relation between the second temperature distribution (treated as the "first temperature distribution") at the time ta after the predetermined time Δt elapses from the above-described specific time tᵢ and the first temperature distribution (treated as the "second temperature distribution") after the time Δtb elapses from the time ta, that is, at the next specific time tᵢ₊₁, the prediction can be performed in consideration of the temperature change caused by the heat input. In addition, the information on the temperature distribution by the numerical analysis can be utilized as more training data, and thus the prediction accuracy can be efficiently improved.

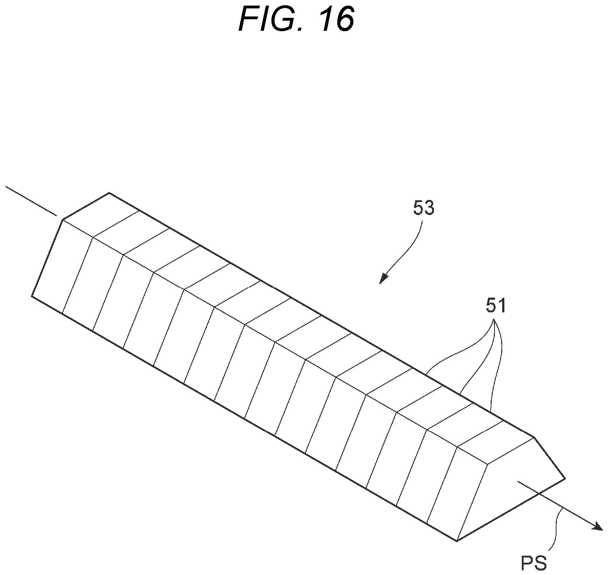

FIG. 16 is a diagram illustrating a state in which a plurality of unit elements obtained by dividing a shape of a deposited body are simulated to shapes of welding beads. In a stage of creating a manufacturing plan for building a deposited body, a path (movement path of the torch 11) PS indicating a formation trajectory and a formation order of welding beads is set, and unit volume models 51, which are the plurality of unit elements, are arranged to appear along the path PS in time order. Each unit volume model 51 preferably has a shape simulated to a shape of an actual welding bead. In addition, each unit volume model 51 is set to a size according to welding conditions. That is, based on the information on the movement direction and the movement speed of the heat source included in the input data input to the learning device 200, welding beads on a specific path are simulated, and a bead shape model 53, which is an aggregate of the plurality of unit volume models 51 in which the unit volume models 51 appear along the path in time order, is generated. The bead shape model 53 sets a temperature at the time of appearance of the unit volume models 51 according to a heat input amount supplied from the heat source when the welding beads are formed.

By predicting the temperature distribution using the bead shape model 53 that simulates the shape of the welding beads according to the embodiment as described above, accurate prediction in which a difference from an actual temperature distribution of the deposited body is reduced can be performed.

### [Examples]

### <Verification Example 1>

The temperature distribution predicted using the above-described temperature history prediction device was compared with the temperature distribution obtained by numerical analysis.

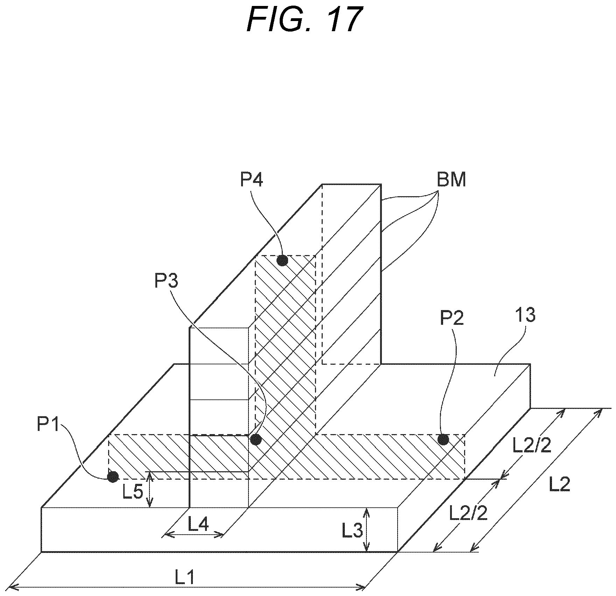

FIG. 17 is a model diagram illustrating a shape of a deposited body used in Verification Example 1. The model has a shape in which five layers of bead shape models BM implemented by voxel-like hexahedral elements (rectangular parallelepipeds) that simulate welding beads are deposited on an upper surface of a flat plate-shaped base 13. When the model is built using the welding beads, five layers of welding beads were deposited, and then a temperature distribution in a two-dimensional cross section at the time of air cooling was predicted.

Dimensions of the model are as follows.
L1: 100 mm
L2: 100 mm
L3: 6 mm
L4: 4 mm
L5: 4 mm

The two-dimensional cross section for obtaining the temperature distribution was a cross section (a hatched surface indicated by broken lines in FIG. 17) obtained by cutting the model perpendicularly to a longitudinal direction of the bead shape models BM at a position of L2/2 along the longitudinal direction of the bead shape models BM from an end of the model.

Learning method: with respect to a total of 389 cases in which a heat input amount and an inter-pass temperature were randomly changed, a temperature distribution in the cross section at a time t and a temperature distribution at a time t + 10 seconds when air cooling of 800°C to 100°C was performed were obtained by numerical analysis, and the information on these temperature distributions was machine-learned to generate a prediction model.

Prediction method: a step of predicting a temperature distribution after 10 seconds using an initial temperature as an explanatory variable using the prediction model and a step of predicting a temperature distribution after 20 seconds using the temperature distribution after 10 seconds as an explanatory variable using the prediction model were repeatedly performed.

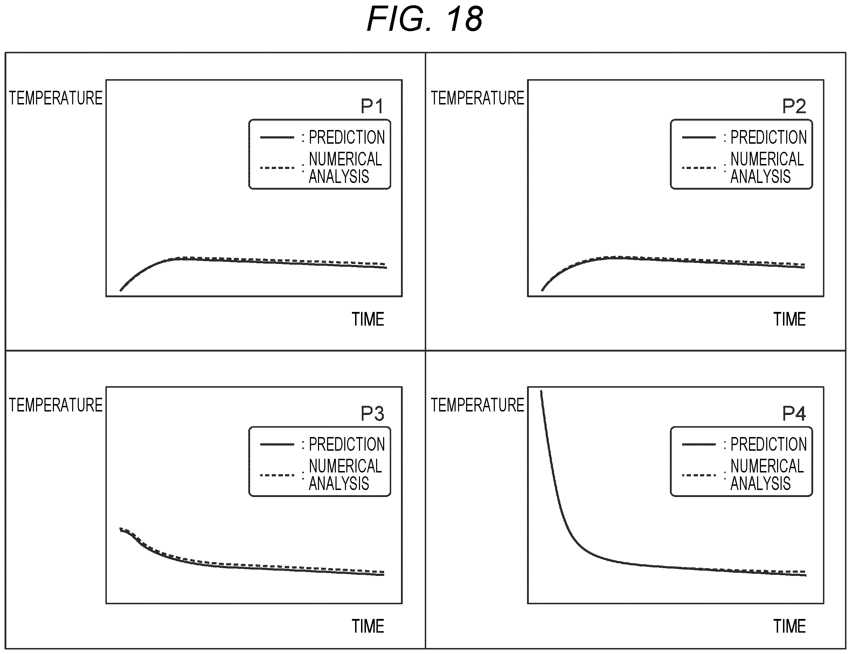

FIG. 18 is a graph illustrating test results showing temporal changes between predicted temperature values at positions P1, P2, P3, and P4 on the two-dimensional cross section illustrated in FIG. 17 and temperatures obtained by numerical analysis. It was found that at any of the positions P1 to P4, the predicted temperature value almost coincides with the temperature obtained by the numerical analysis, and the temperature distribution can be predicted with sufficient accuracy.

### <Verification Example 2>

When a block body is built by the same procedure as in Verification Example 1, a predicted temperature distribution was compared with a temperature distribution obtained by numerical analysis.

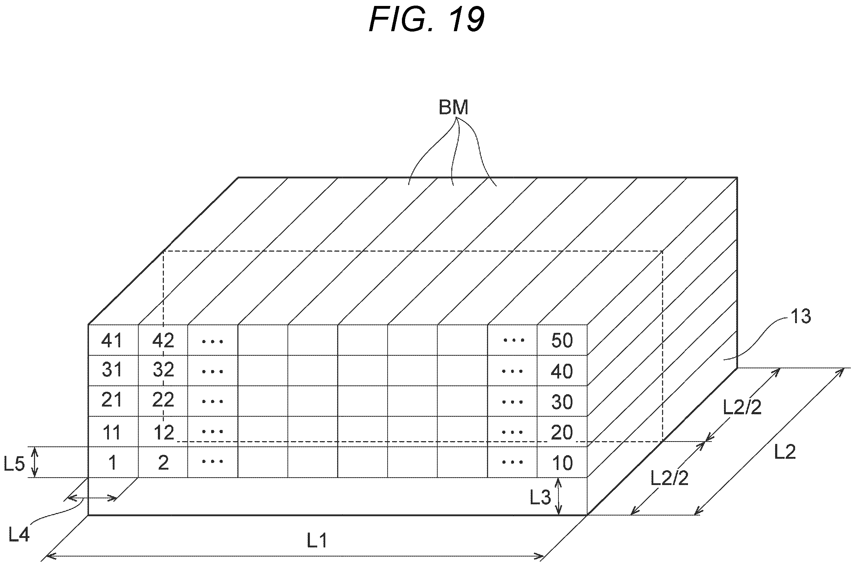

FIG. 19 is a model diagram illustrating a shape of a deposited body used in Verification Example 2. The model has a shape in which a total of 50 bead shape models BM implemented by voxel-like hexahedral elements (rectangular parallelepipeds) that simulate welding beads are deposited on the upper surface of the flat base 13, with 10 rows of each layer deposited in five layers. When the model is built using the welding beads, five layers of welding beads were deposited, and then a temperature distribution in a two-dimensional cross section at the time of air cooling was predicted.

Dimensions of the model are as follows.
L1: 100 mm
L2: 100 mm
L3: 6 mm
L4: 10 mm
L5: 4 mm

The two-dimensional cross section for obtaining the temperature distribution was a cross section obtained by cutting the model perpendicularly to a longitudinal direction of the bead shape models BM as indicated by a broken line at a position of L2/2 along the longitudinal direction of the bead shape models BM from an end of the model.

Learning method: with respect to a total of 74 cases (high temperature range of 800°C or higher: 49 cases, low temperature range of 100°C to 800°C: 25 cases) in which a heat input amount and an inter-pass temperature were randomly changed, a temperature distribution in the cross section at a time t and a temperature distribution at a time t + 10 seconds when air cooling of 800°C to 100°C was performed were obtained by numerical analysis, and the information on these temperature distributions was machine-learned to generate a prediction model.

Prediction method: a step of predicting a temperature distribution after 10 seconds using an initial temperature as an explanatory variable using the prediction model and a step of predicting a temperature distribution after 20 seconds using the temperature distribution after 10 seconds as an explanatory variable using the prediction model were repeatedly performed.

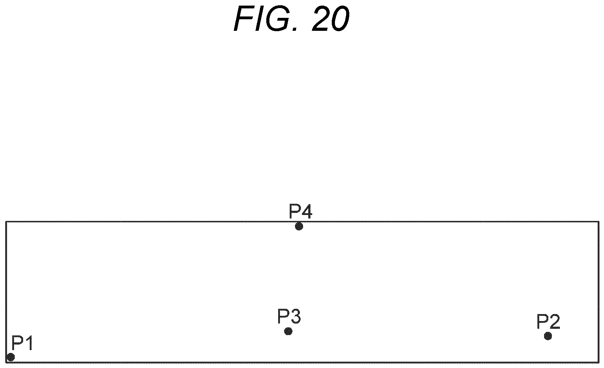

FIG. 20 is a cross-sectional view illustrating predicted positions of a temperature distribution in the model illustrated in FIG. 19. Here, one end of a lower layer in the quadrangular cross section is designated as P1, the other end is designated as P2, the middle is designated as P3, and the middle of an upper layer is designated as P4.

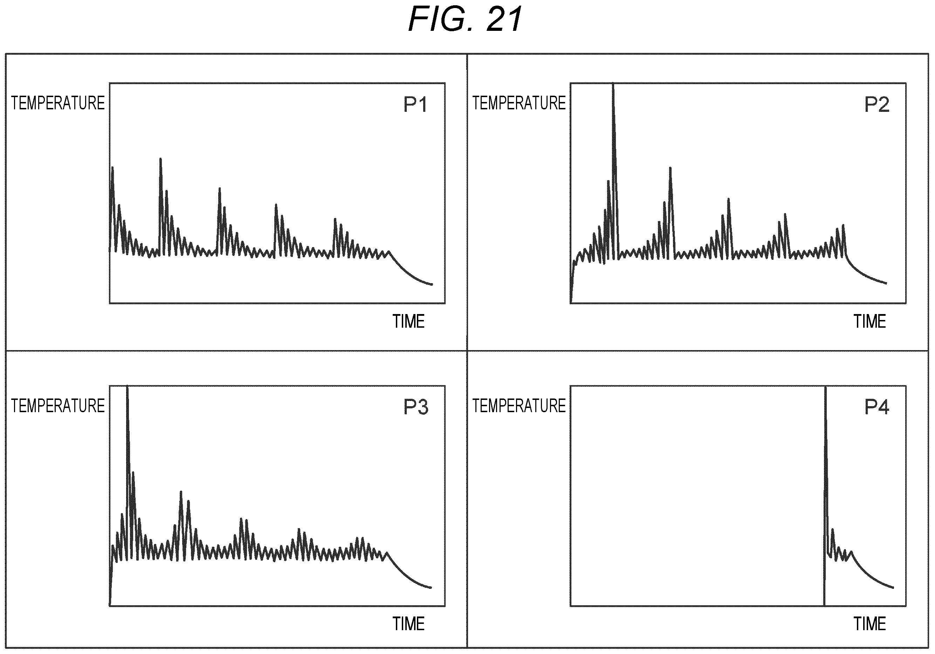

FIG. 21 is a graph illustrating test results showing temporal changes between predicted temperature values at the positions P1, P2, P3, and P4 on the two-dimensional cross section illustrated in FIG. 19 and temperatures obtained by numerical analysis. At any of the positions P1 to P4, there was almost no difference in temporal change between the predicted temperature value and the temperature obtained by numerical analysis, and a standard deviation of the difference between the predicted temperature value and the temperature obtained by numerical analysis was 6.2°C. In addition, a calculation time for obtaining the temperature distribution by numerical analysis was 3,850 seconds, but the calculation time for prediction using the prediction model was shortened to 13.4 seconds.

As described above, the present invention is not limited to the above-described embodiments, and combinations of the respective configurations of the embodiments and changes and applications made by those skilled in the art based on the description of the specification and well-known techniques are also intended for the present invention and are included in the scope of protection.

As described above, the following matters are disclosed in the present specification.
(1) A learning device that generates, by performing machine learning, a prediction model that predicts a temperature history during the building of a deposited body when the deposited body is built using welding beads obtained by melting and solidifying a filler metal by moving a heat source along a predetermined path, for each of unit elements obtained by dividing a shape of the deposited body, the learning device including:
   a temperature distribution acquisition unit configured to obtain a first temperature distribution representing temperatures of a plurality of the unit elements at a specific time of the deposited body and a second temperature distribution representing temperatures of the plurality of unit elements at a time when a predetermined time elapses from the specific time; and
   a learning unit configured to generate the prediction model by performing machine learning on a relation between the first temperature distribution and the second temperature distribution obtained by the temperature distribution acquisition unit, in association with the predetermined time.

According to the learning device, the relation between the first temperature distribution and the second temperature distribution after the predetermined time elapses can be acquired as a large amount of training data based on calculation results made by numerical analysis or actual measurement values. Therefore, it is possible to generate the prediction model capable of obtaining high prediction accuracy by performing machine learning on the large amount of training data. In addition, the temperature is obtained for each unit element, and thus the prediction model capable of accurately predicting the temperature at any position of the deposited body is obtained.

(2) The learning device according to (1), in which training data used for the machine learning includes a heat input amount supplied from the heat source when the welding beads are formed, a movement direction and a movement speed of the heat source, a formation volume of the welding beads per unit time, and state information indicating the presence or absence of the welding bead for each unit element.

According to the learning device, information related to the heat source is included, and thus the prediction model capable of predicting the temperature distribution when the welding beads are formed while the heat source moves is obtained. Further, by learning the state information indicating the presence or absence of the welding bead, it is possible to predict the generation of the welding bead along with the movement of the heat source together with the temperature distribution.

(3) The learning device according to (2), in which the training data further includes size information of the unit element.

According to the learning device, the size information of the unit elements is included in the input data, and thus it is possible to perform prediction at a size (mesh size) of any unit element.

(4) The learning device according to any one of (1) to (3), in which the temperature distribution acquisition unit calculates the temperatures of the plurality of unit elements by numerical analysis when the welding beads are formed to obtain the first temperature distribution and the second temperature distribution.

According to the learning device, the temperature distribution is obtained by calculation through numerical analysis, and thus a large amount of temperature information can be generated, and a large amount of training data can be easily acquired. Accordingly, the prediction accuracy of the prediction model is easily improved.

(5) The learning device according to any one of (1) to (4), in which the temperature distribution acquisition unit repeatedly obtains the second temperature distribution by further passing a time when the predetermined time elapses until the temperatures of the unit elements corresponding to the welding beads after formation in the second temperature distribution become equal to or lower than a predetermined reference temperature.

According to the learning device, by repeatedly obtaining the second temperature distribution until the welding beads after the formation have a temperature equal to or lower than the reference temperature, it is possible to generate the prediction model capable of accurately predicting the temperature distribution up to a time corresponding to an inter-pass time at which a next welding bead can be formed in the welding bead.

(6) The learning device according to any one of (1) to (5), in which the temperature distribution acquisition unit acquires a plurality of sets of the first temperature distribution and the second temperature distribution by changing at least one of the specific time and the predetermined time, and
the learning unit generates the prediction model by performing machine learning on a relation between each set of the plurality of sets of the first temperature distribution and the second temperature distribution, in association with a change in the specific time and the predetermined time.

According to the learning device, it is possible to increase the number of training data and improve the prediction accuracy by acquiring the plurality of sets of the first temperature distribution and the second temperature distribution in which at least one of the specific time and the predetermined time is different.

(7) The learning device according to any one of (1) to (5), in which the temperature distribution acquisition unit acquires a first data set of a plurality of the first temperature distributions in a time range including a plurality of different specific times and a second data set of a plurality of the second temperature distributions in a time range including specific times when the predetermined time elapses from the respective plurality of specific times, and acquires a third data set of the second temperature distributions at the specific times of the second data set and a fourth data set of the first temperature distributions at the specific times of the first data set corresponding to when there is heat input to the deposited body from the specific times, and
the learning unit generates the prediction model by performing machine learning on a relation between the first data set and the second data set in association with the respective predetermined times, and performing machine learning on a relation between the third data set and the fourth data set in association with a time difference between the second temperature distribution and the first temperature distribution.

According to the learning device, the generated prediction model is trained for the temperature change due to the cooling at the predetermined time and the heating at the time of the next heat input, and thus a cycle of the cooling and the heat input can be relatively simply learned, and the prediction model capable of being expected to perform prediction with higher accuracy can be generated.

(8) A temperature history prediction device including:
the prediction model generated by the learning device according to any one of (1) to (7);
an input data acquisition unit configured to acquire input data including information on a temperature distribution of the plurality of unit elements at an initial time when the deposited body is built;
a prediction unit configured to obtain a predicted temperature distribution by the prediction model predicting a temperature distribution after a predetermined time elapses based on a state of the temperature distribution included in the input data; and
a prediction control unit configured to input information on the predicted temperature distribution as the input data to the prediction unit again and further obtain a predicted temperature distribution after the predetermined time elapses.

According to the temperature history prediction device, the relation between the temperature distribution at the specific time and the temperature distribution at the time after the predetermined time elapses from the specific time can be acquired as a large amount of training data based on the calculation results made by numerical analysis or the actual measurement values, for example. If the prediction model obtained by performing machine learning on the large amount of training data is used, the temperature distribution of the deposited body during the building can be predicted with high accuracy and at high speed. In addition, the temperature distribution after the predetermined time can be continuously predicted by inputting the temperature distribution after the predetermined time to the prediction model. Furthermore, a temperature is obtained for each unit element, and thus a temperature at any position of the deposited body can be predicted.

(9) The temperature history prediction device according to (8), in which a time interval during which the prediction control unit repeatedly obtains the predicted temperature distribution is set to a constant interval.

According to the temperature history prediction device, the temperature history of the deposited body can be determined sequentially in time series.

(10) The temperature history prediction device according to (8), in which the time interval during which the prediction control unit repeatedly obtains the predicted temperature distribution is set to be longer as it goes back to a time before a time when the temperatures of the welding beads in the predicted temperature distribution reach a predetermined reference temperature.

According to the temperature history prediction device, the calculation at a stage during which the predicted temperature reaches a temperature close to the reference temperature can be omitted.

(11) The temperature history prediction device according to (8), in which the prediction control unit repeatedly predicts the predicted temperature distribution by the prediction unit until the temperatures of the unit elements corresponding to the welding beads in the predicted temperature distribution fall below the predetermined reference temperature, and outputs a time required to fall below the reference temperature as an inter-pass time.

According to the temperature history prediction device, by outputting the inter-pass time, it is possible to efficiently create the manufacturing plan for the deposited body according to a prediction result of the temperature distribution and the inter-pass time without actually performing the building.

(12) The temperature history prediction device according to (8), in which
the input data acquisition unit acquires information on a heat input amount supplied from the heat source when the welding beads are formed, a movement direction and a movement speed of the heat source, a formation volume of the welding beads per unit time, and an element state indicating the presence or absence of the welding bead for each unit element, and
the prediction control unit obtains the temperature of the unit element corresponding to the welding bead based on the information on the predicted temperature distribution output from the prediction unit after the welding beads are formed along the specific path, and inputs the information on the predicted temperature distribution as the input data to the prediction unit to obtain the predicted temperature distribution when the temperature falls below the predetermined reference temperature for a first time.

According to the temperature history prediction device, it is possible to accurately predict the temperature distribution when the welding beads are formed while the heat source moves by acquiring the information related to the heat source and predicting the temperature distribution. In addition, the state information indicating the presence or absence of the welding bead is included in the input data, and thus the generation of the welding beads along with the movement of the heat source can be accurately reproduced, and the prediction accuracy of the temperature distribution can be improved. By predicting the temperature distribution when the temperature of the unit elements corresponding to the welding beads falls below the reference temperature, it is possible to predict the temperature distribution when the inter-pass time elapses.

(13) The temperature history prediction device according to any one of (8) to (12), in which the prediction unit simulates the welding beads formed along a specific path based on the information on the movement direction and the movement speed of the heat source included in the input data, generates a bead shape model which is an aggregate of a plurality of unit volume models in which unit volume models appear along the path in time order, and obtains a temperature at the time of appearance of the unit volume models according to the heat input amount supplied from the heat source when the welding beads are formed.

According to the temperature history prediction device, the prediction accuracy of the temperature distribution can be further improved by forming the bead shape model according to the heat input amount supplied from the heat source.

(14) The temperature history prediction device according to any one of (8) to (13), in which
the input data acquisition unit acquires size information of the unit elements, and
the prediction unit outputs the second temperature distribution having an element size different from that of the first temperature distribution.

According to the temperature history prediction device, the element size of the unit elements can be appropriately balanced between the required prediction accuracy and the calculation amount, and thus the temperature distribution can be efficiently predicted.

(15) A temperature history prediction device including:
the learning device according to any one of (1) to (7).

According to the temperature history prediction device, the temperature history of the manufactured object can be predicted with high accuracy and at high speed.

(16) A welding system including:
the temperature history prediction device according to any one of (8) to (15); and
a welding device configured to build the deposited body based on building conditions determined using the information on the temperature distribution predicted by the temperature history prediction device.

According to the welding system, a high-quality deposited body can be built by implementing a more appropriate manufacturing plan.

(17) A program that generates, by performing machine learning, a prediction model that predicts a temperature history during the building of a deposited body when the deposited body is built using welding beads obtained by melting and solidifying a filler metal by moving a heat source along a predetermined path, for each of unit elements obtained by dividing a shape of the deposited body, the program causing a computer to implement:
a function of obtaining a first temperature distribution representing temperatures of a plurality of the unit elements at a specific time of the deposited body and a second temperature distribution representing temperatures of the plurality of unit elements at a time when a predetermined time elapses from the specific time; and
a function of generating the prediction model by performing machine learning on a relation between the first temperature distribution and the second temperature distribution, and the predetermined time.

According to the program, the relation between the first temperature distribution and the second temperature distribution after the predetermined time elapses can be acquired as a large amount of training data based on calculation results made by numerical analysis or actual measurement values. Therefore, it is possible to generate the prediction model capable of obtaining high prediction accuracy by performing machine learning on the large amount of training data. In addition, the temperature is obtained for each unit element, and thus the prediction model capable of accurately predicting the temperature at any position of the deposited body is obtained.

(18) A program for causing a computer to implement:
by using the prediction model generated by the learning device according to any one of (1) to (7),
a function of acquiring input data including information on a temperature distribution of the plurality of unit elements at an initial time when the deposited body is built;
a function of obtaining a predicted temperature distribution by the prediction model predicting a temperature distribution after a predetermined time elapses based on a state of the temperature distribution included in the input data; and
a function of further predicting a temperature distribution after the predetermined time elapses by using the prediction model again with the predicted temperature distribution as the input data.

According to the program, it is possible to predict the temperature distribution of the deposited body during the building with high accuracy and at high speed using the prediction model that is trained for the relation between the temperature distribution at the specific time and the temperature distribution at the time when the predetermined time elapses from the specific time. In addition, the temperature distribution after the predetermined time can be continuously predicted by inputting the temperature distribution after the predetermined time to the prediction model.

The present application is based on Japanese Patent Application No. 2022-037972 filed on March 11, 2022, the contents of which are incorporated herein by reference.

### REFERENCE SIGNS LIST

11: torch
13: base
15: building control device
17: manipulator
19: filler metal supply device
19a: reel
19b: feeding mechanism
21: manipulator control device
23: heat source control device
31: element dividing unit
33: temperature distribution acquisition unit
35: learning unit
37: simulation unit
41: prediction model
43: input data acquisition unit
45: prediction unit
47: prediction control unit
51: unit volume model
53: bead shape model
B: welding bead
Ly1, Ly2, Ly3, and Ly4: layer
M: filler metal
W: deposited body
100: welding device
200: learning device
300: temperature history prediction device

## Claims

1. A learning device that generates, by performing machine learning, a prediction model that predicts a temperature history during the building of a deposited body when the deposited body is built using welding beads obtained by melting and solidifying a filler metal by moving a heat source along a predetermined path, for each of unit elements obtained by dividing a shape of the deposited body, the learning device comprising:
a temperature distribution acquisition unit configured to obtain a first temperature distribution representing temperatures of a plurality of the unit elements at a specific time of the deposited body and a second temperature distribution representing temperatures of the plurality of unit elements at a time when a predetermined time elapses from the specific time; and
a learning unit configured to generate the prediction model by performing machine learning on a relation between the first temperature distribution and the second temperature distribution obtained by the temperature distribution acquisition unit, in association with the predetermined time.

2. The learning device according to claim 1, wherein
training data used for the machine learning includes a heat input amount supplied from the heat source when the welding beads are formed, a movement direction and a movement speed of the heat source, a formation volume of the welding beads per unit time, and state information indicating the presence or absence of the welding bead for each unit element.

3. The learning device according to claim 2, wherein
the training data further includes size information of the unit element.

4. The learning device according to claim 1, wherein
the temperature distribution acquisition unit calculates the temperatures of the plurality of unit elements by numerical analysis when the welding beads are formed to obtain the first temperature distribution and the second temperature distribution.

5. The learning device according to claim 2, wherein
the temperature distribution acquisition unit calculates the temperatures of the plurality of unit elements by numerical analysis when the welding beads are formed to obtain the first temperature distribution and the second temperature distribution.

6. The learning device according to claim 3, wherein
the temperature distribution acquisition unit calculates the temperatures of the plurality of unit elements by numerical analysis when the welding beads are formed to obtain the first temperature distribution and the second temperature distribution.

7. The learning device according to any one of claims 1 to 6, wherein
the temperature distribution acquisition unit repeatedly obtains the second temperature distribution by further passing a time when the predetermined time elapses until the temperatures of the unit elements corresponding to the welding beads after formation in the second temperature distribution become equal to or lower than a predetermined reference temperature.

8. The learning device according to any one of claims 1 to 6, wherein
the temperature distribution acquisition unit acquires a plurality of sets of the first temperature distribution and the second temperature distribution by changing at least one of the specific time and the predetermined time, and
the learning unit generates the prediction model by performing machine learning on a relation between each set of the plurality of sets of the first temperature distribution and the second temperature distribution, in association with a change in the specific time and the predetermined time.

9. The learning device according to claim 7, wherein
the temperature distribution acquisition unit acquires a plurality of sets of the first temperature distribution and the second temperature distribution by changing at least one of the specific time and the predetermined time, and
the learning unit generates the prediction model by performing machine learning on a relation between each set of the plurality of sets of the first temperature distribution and the second temperature distribution, in association with a change in the specific time and the predetermined time.

10. The learning device according to any one of claims 1 to 6, wherein
the temperature distribution acquisition unit acquires a first data set of a plurality of the first temperature distributions in a time range including a plurality of different specific times and a second data set of a plurality of the second temperature distributions in a time range including specific times when the predetermined time elapses from the respective plurality of specific times, and acquires a third data set of the second temperature distributions at the specific times of the second data set and a fourth data set of the first temperature distributions at the specific times of the first data set corresponding to when there is heat input to the deposited body from the specific times, and
the learning unit generates the prediction model by performing machine learning on a relation between the first data set and the second data set in association with the respective predetermined times, and performing machine learning on a relation between the third data set and the fourth data set in association with a time difference between the second temperature distribution and the first temperature distribution.

11. The learning device according to claim 7, wherein
the temperature distribution acquisition unit acquires a first data set of a plurality of the first temperature distributions in a time range including a plurality of different specific times and a second data set of a plurality of the second temperature distributions in a time range including specific times when the predetermined time elapses from the respective plurality of specific times, and acquires a third data set of the second temperature distributions at the specific times of the second data set and a fourth data set of the first temperature distributions at the specific times of the first data set corresponding to when there is heat input to the deposited body from the specific times, and
the learning unit generates the prediction model by performing machine learning on a relation between the first data set and the second data set in association with the respective predetermined times, and performing machine learning on a relation between the third data set and the fourth data set in association with a time difference between the second temperature distribution and the first temperature distribution.

12. A temperature history prediction device comprising:
the prediction model generated by the learning device according to any one of claims 1 to 6;
an input data acquisition unit configured to acquire input data including information on a temperature distribution of the plurality of unit elements at an initial time when the deposited body is built;
a prediction unit configured to obtain a predicted temperature distribution by the prediction model predicting a temperature distribution after a predetermined time elapses based on a state of the temperature distribution included in the input data; and
a prediction control unit configured to input information on the predicted temperature distribution as the input data to the prediction unit again and further obtain a predicted temperature distribution after the predetermined time elapses.

13. A temperature history prediction device comprising:
the prediction model generated by the learning device according to claim 7;
an input data acquisition unit configured to acquire input data including information on a temperature distribution of the plurality of unit elements at an initial time when the deposited body is built;
a prediction unit configured to obtain a predicted temperature distribution by the prediction model predicting a temperature distribution after a predetermined time elapses based on a state of the temperature distribution included in the input data; and
a prediction control unit configured to input information on the predicted temperature distribution as the input data to the prediction unit again and further obtain a predicted temperature distribution after the predetermined time elapses.

14. The temperature history prediction device according to claim 12, wherein
a time interval during which the prediction control unit repeatedly obtains the predicted temperature distribution is set to a constant interval.

15. The temperature history prediction device according to claim 12, wherein
the time interval during which the prediction control unit repeatedly obtains the predicted temperature distribution is set to be longer as it goes back to a time before a time when the temperatures of the welding beads in the predicted temperature distribution reach a predetermined reference temperature.

16. The temperature history prediction device according to claim 12, wherein
the prediction control unit repeatedly predicts the predicted temperature distribution by the prediction unit until the temperatures of the unit elements corresponding to the welding beads in the predicted temperature distribution fall below the predetermined reference temperature, and outputs a time required to fall below the reference temperature as an inter-pass time.

17. The temperature history prediction device according to claim 12, wherein
the input data acquisition unit acquires information on a heat input amount supplied from the heat source when the welding beads are formed, a movement direction and a movement speed of the heat source, a formation volume of the welding beads per unit time, and an element state indicating the presence or absence of the welding bead for each unit element, and
the prediction control unit obtains the temperatures of the unit elements corresponding to the welding beads based on the information on the predicted temperature distribution output from the prediction unit after the welding beads are formed along the specific path, and inputs the information on the predicted temperature distribution as the input data to the prediction unit to obtain the predicted temperature distribution when the temperature falls below the predetermined reference temperature for a first time.

18. The temperature history prediction device according to claim 12, wherein
the prediction unit simulates the welding beads formed along a specific path based on the information on the movement direction and the movement speed of the heat source included in the input data, generates a bead shape model which is an aggregate of a plurality of unit volume models in which unit volume models appear along the path in time order, and obtains a temperature at the time of appearance of the unit volume models according to the heat input amount supplied from the heat source when the welding beads are formed.

19. The temperature history prediction device according to claim 12, wherein
the input data acquisition unit acquires size information of the unit elements, and
the prediction unit outputs the second temperature distribution having an element size different from that of the first temperature distribution.

20. A temperature history prediction device comprising:
the learning device according to any one of claims 1 to 6.

21. A welding system comprising:
the temperature history prediction device according to claim 12; and
a welding device configured to build the deposited body based on building conditions determined using the information on the temperature distribution predicted by the temperature history prediction device.

22. A program that generates, by performing machine learning, a prediction model that predicts a temperature history during the building of a deposited body when the deposited body is built using welding beads obtained by melting and solidifying a filler metal by moving a heat source along a predetermined path, for each of unit elements obtained by dividing a shape of the deposited body, the program causing a computer to implement:
a function of obtaining a first temperature distribution representing temperatures of a plurality of the unit elements at a specific time of the deposited body and a second temperature distribution representing temperatures of the plurality of unit elements at a time when a predetermined time elapses from the specific time; and
a function of generating the prediction model by performing machine learning on a relation between the first temperature distribution and the second temperature distribution, and the predetermined time.

23. A program for causing a computer to implement:
by using the prediction model generated by the learning device according to any one of claims 1 to 6,
a function of acquiring input data including information on a temperature distribution of the plurality of unit elements at an initial time when the deposited body is built;
a function of obtaining a predicted temperature distribution by the prediction model predicting a temperature distribution after a predetermined time elapses based on a state of the temperature distribution included in the input data; and
a function of further predicting a temperature distribution after the predetermined time elapses by using the prediction model again with the predicted temperature distribution as the input data.
